# EUROPEAN PATENT SPECIFICATION

(11) **EP 0 612 636 B1**
(45) Date of publication and mention of the grant of the patent: **12.11.1997**
(21) Application number: 94500030.5
(22) Date of filing: 18.02.1994
(51) Int. Cl.: B60J 3/02

(54) **Automobile sunvisor**
Sonnenblende für Kraftfahrzeuge
Pare-soleil pour véhicules automobiles

(30) Priority: 22.02.1993 ES 9300339
(43) Date of publication of application: 31.08.1994
(73) Proprietor: FICO I.T.M., S.A., E-08027 Barcelona (ES)
(72) Inventor: Aymerich Munoz, José, E-08191 Rubi (ES); Prat Castan, Jesus, E-08191 Rubi (ES)
(74) Representative: SUGRANES - VERDONCES - FERREGÜELA

(56) References cited:
- WO-A-92/14623
- GB-A- 2 204 290

## Description

### Field of the Invention.

This invention relates to an automobile sunvisor structured on a hollow body formed by blow or injection moulding of a plastics material.

### Background of the Invention

Automobile sunvisors manufactured from a hollow body formed by blow moulding a plastics material, such as, among others, polypropylene and polythene, are well known and widely produced industrially.

As a known embodiment of such sunvisors, there may be cited Spanish patent P 9100391 (corresponding to EP-A-0 525 148) which discloses a sunvisor in which the said hollow body comprises a fixing spring for receiving the pivot pin of the support attached to the vehicle structure, so that the sunvisor may be rotated about such pivot pin and the support itself, a hanging bridge, which may engage a corresponding support, also attached to said structure, an external sheath-like covering formed by a sheet of thin plastics material, conferring on the sunvisor an external finish in accordance with the finish of the vehicle passenger compartment, and any additional device such as may be the so-called vanity mirror which is normally included as original equipment in the passenger side sunvisor. Further to the foregoing, the sunvisor hollow body according to Spanish patent P 9100391 (corresponding to EP-A-0 525 148) is completely filled with a plastics material acting as structural reinforcement and avoiding, under normal conditions of use, the deformation of the sunvisor.

A further known embodiment of said sunvisors is the one disclosed in Spanish patent P 9102450 (corresponding to EP-A-0 562 085 published on 29.09.93) which describes a sunvisor comprising the above mentioned functional members, i.e., a fixing spring, a hanging bridge, an external sheath-like covering and the said additional device. In this case, i.e. in the sunvisor of Spanish patent P 9102450 (corresponding to EP-A-0 562 085), the structural reinforcement of the hollow body is achieved with a plurality of ribs disposed (on the inside of the larger facing sides.

The structural reinforcing members described above included in the hollow bodies of the sunvisors of Spanish patents P 9100391 (corresponding to EP-A-0 525 148) and P 9102450 (corresponding to EP-A-0 562 085) confer on said sunvisors a high degree of rigidity which gives the user a feeling of excessive hardness when handling such sunvisors and which in certain cases may mean that the finish of such sunvisors is clearly not in keeping with the interior finish of the vehicle passenger compartment when it is furnished with top quality equipment and accessories. The usual sheath or external covering does not provide a satisfactory reduction of said feeling of excessive hardness.

It is known from the patent document GB-A-2 204 290 to dispose a layer of foamed P.V.C. or polyuretane between the body of the visor and a P.V.C. cover. But this layer is merely adapted on the external surface of the assembled modular parts forming the body of the visor.

### Brief Summary of the Invention

To provide a solution to the above problem, caused by the feeling of hardness perceived by the user when handling the known embodiments of sunvisor such as those described above, a new embodiment of automobile sunvisor is disclosed.

The sunvisor of the invention comprises a hollow body formed by blow or injection moulding of a plastics material, preferably a polyolefin such as polypropylene, having an essentially rectangular prismatic shape, the profile of which is variable in accordance with the configuration of the automobile passenger compartment.

The sunvisor of the invention comprises, furthermore, the known members described below. A fixing spring arranged in the inside of the hollow body and dimensioned to receive the corresponding pivot pin of a bent support attached to the vehicle structure and having means which, when the sunvisor is attached to said support, enables the sunvisor to be rotated by the user about said pivot pin and to occupy stable positions of use and the rest position(s) of the sunvisor to be set. A hanging bridge which, suitably disposed relative to the fixing spring, may engage a corresponding support also attached to the vehicle structure. Once the hanging bridge is engaged with the said support, it provides the sunvisor with an additional point of support for relieving possible mechanical overloads on the coupling of the pivot pin of the bent support with the fixing spring. An additional device, such as may be the so-called vanity mirror which is normally included as original equipment in the passenger side sunvisor. Structural reinforcing means which, arranged in the inside of the hollow body, prevents the sunvisor from being deformed under normal conditions of use. And an external sheath-like covering made from a plastics material, preferably polypropylene, providing the sunvisor with a surface finish in keeping with the interior finish of the automobile passenger compartment.

The sunvisor of the invention is characterized in that on one or both of the larger sides of the hollow body there is a respective recess of substantially constant depth, the length and contour of which are variable depending on the dimensions and shape of said hollow body. The recess forms the housing for the sheet of soft spongy material prepared preferably from foamed polyolefin. Said sheet of soft spongy material is so dimensioned in length and thickness snugly to be housed in said recess, flush with the corresponding outer surface of the hollow body.

The sheet is comprised between the hollow body itself and the external covering, wherewith the latter is provided defining a corresponding soft area.

In accordance with a further characteristic embodiment of the sunvisor of the invention, it comprises the known members described above and is characterized by a recess of substantially constant depth, the length and contour of which are variable depending on the dimensions and shape of the hollow body, said recess forming a housing for the sheet of soft spongy material, preferably made from foamed polyolefin. Said sheet of soft spongy material is so dimensioned in length and thickness snugly to be housed in said recess flush with the outer surface of said hollow body.

The sheet is comprised between the hollow body itself and the external sheath-like covering, wherewith the latter is provided defining a soft area extending around the lower longitudinal edge of the sunvisor, between both larger sides of the sunvisor.

The above described features of the sunvisor of the invention provide a low cost solution for the problems occasionally arising from the hard feeling presented by the known embodiments of sunvisors such as those described. In fact, in both characteristic embodiments of the sunvisor of the invention, the recess or recesses in the hollow body and the corresponding sheets of soft spongy material housed in said recesses are dimensioned in correspondence with the dimensions and shape of the sunvisor and occupy the portions of the larger sides of the sunvisor which are taken hold of by the user, under normal conditions of use, to change the position of the sunvisor. In this way, when the user takes hold of the sunvisor, he presses on the soft areas, thereby avoiding the said feeling of hardness. Furthermore, the fact that the sheet of soft spongy material is flush with the corresponding outer surface of the hollow body and between it and the external covering or sheath implies that in no way is the outer appearance of the sunvisor affected in any way, whereby said outer covering of the hollow body suffers no detriment in retaining the function of making the external finish of the sunvisor appropriate to the finish of the vehicle passenger compartment.

### Brief Description of the Drawings

The automobile sunvisor of the invention is illustrated in the sheets of drawings of the specification. In the drawings:
Figure 1 is a front view showing one embodiment VP1 of the sunvisor of the invention.
Figure 2 is a cross-section view on the line II-II of Figure 1.
Figure 3 is a cross-section view on the line III-III of Figure 1.
Figure 4 is a front view showing an embodiment VP2 of the sunvisor of the invention.
Figure 5 is a cross-section view on the line V-V of Figure IV.

### Detailed Description of the Embodiment

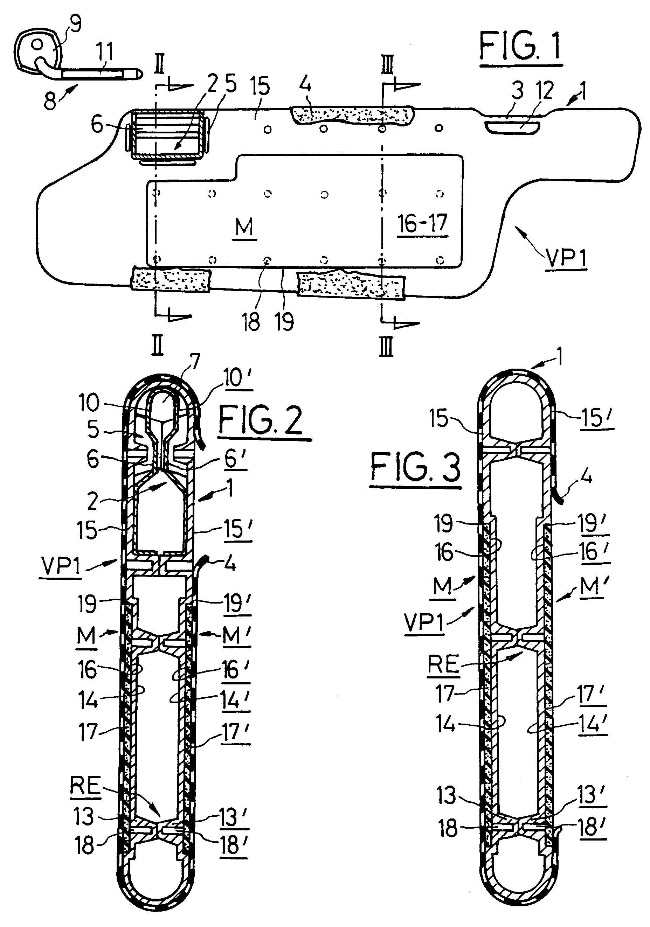

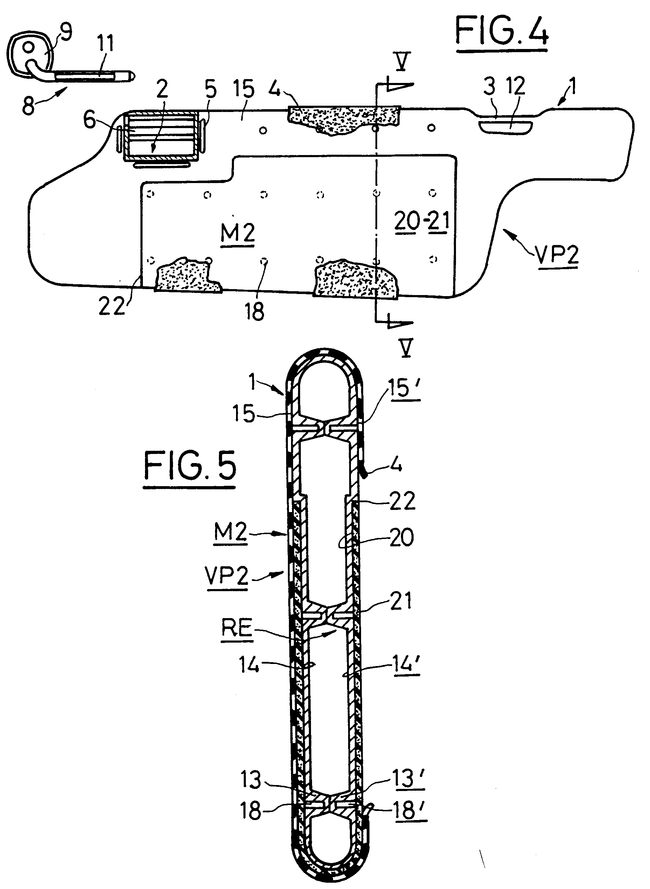

Both embodiments VP1 and VP2 of the automobile sunvisor of the invention described as examples of embodiments have the same constructional members which, for greater clarity, are designated in the specification and drawings with the same references. In this way, the following description of said constructional members relates to the sunvisor embodiment VP1 shown in Figures 1, 2 and 3 and, by extension, it is fully applicable to the exemplified embodiment of the sunvisor VP2 shown in Figures 4 and 5.

Figures 1, 2 and 3 of the drawings show how the sunvisor embodiment VP1 of the invention comprises the following known members: the hollow body 1; the fixing spring 2; the holding bridge 3; the external covering 4; and the structural reinforcing means RE disposed in the hollow body 1. These known members are described below.

The hollow body 1 is produced by blow moulding polypropylene which, as is known, is a completely recyclable material, i.e., it may be reused industrially once the working life of the sunvisor has ended. The figures show how the hollow body 1 is of an essentially prismatic rectangular shape, the contour or perimeter of which is adapted to a particular configuration of the vehicle passenger compartment. The dimensions and contour of the hollow body 1 will obviously be determined in each particular application by the configuration of the said passenger compartment, whereby the hollow body 1 shown in said Figures 1, 2 and 3 is given only as an orientative example.

The fixing spring 2 is made from highly resilient sheet steel and is essentially an elongate prismatic rectangle symmetrical about its centre line. As shown in Figures 1 and 2, the fixing spring 2 is arranged inside one of the ends of the hollow body 1 and is framed by the recesses 5, the number and distribution of which suitably set the position of the fixing spring 2 in the inside thereof. The longitudinal recesses 6 and 6' of the fixing spring 2 define the upper longitudinal cavity 7, shown in Figure 2, for snugly receiving the pivot pin 8 of the bent support 9 shown in Figure 1 which, as said above, is fixed to the vehicle structure. When the sunvisor has been attached to the bent support 9, through the fixing spring 2 and the pivot pin 8, respectively, the sunvisor may be rotated around the pivot pin 8 and occupy stable positions of use, the rest position of the sunvisor being fixed by way of the positioning flats 10-10' and 11 on the fixing spring 2 and pivot pin 8 of the bent support 9, respectively, to be seen in Figures 1 and 2.

The hanging bridge 3, shown in Figure 1, is situated at the end of the hollow body 1 opposite to the end occupied by the fixing spring 2 and is suitably disposed relative to the latter. The hanging bridge 3, defined by the opening 12 formed for this purpose in the hollow body 1, is dimensioned in correspondence with a support which, for greater clarity, has not been shown in said Figure 1 and which is attached to the vehicle structure. Once the sunvisor is attached at the respective ends thereof to the bent support 9 and to said not shown support, the latter engagement, i.e., the engagement of the hanging bridge 3 with the support, is for relieving mechanical overloads on the joint formed by the fixing spring 2 and by the pivot pin 8 of the sunvisor and of the bent support 9, respectively.

The structural reinforcing means RE consists, as shown in Figures 2 and 3, of the reinforcing ribs 13-13' which are arranged symmetrically on both larger inner sides 14-14', respectively, of the hollow body 1. Such reinforcing ribs 13-13' are essentially frustoconical in shape and bear upon each other at their respective facing edges, whereby the mechanical capacity to withstand deformation under normal conditions of use of the hollow body 1 is substantially increased in this way.

The above described items of the embodiment of the sunvisor VP1 of the invention are conventional.

Figures 1, 2 and 3 show how the larger outer sides 15-15' of the hollow body 1 are provided with respective, essentially rectangular recesses 16-16' which are approximately coextensive with the hollow body 1 and half as wide. The longitudinal recesses 16-16' are dimensioned and situated in those portions of the hollow body 1 of the sunvisor which are normally taken hold of by the user to change the position of the sunvisor. Therefore, both longitudinal recesses 16-16' shown in Figures 1, 2 and 3 are given only as a guidance since, the dimensions and location of such longitudinal recesses 16-16' will obviously depend on the needs of each particular application and, to be precise, will be defined by the dimensions and shape of the sunvisor hollow body.

The recesses 16-16' are of a relatively shallow, uniform depth and define a housing which is completely filled by respective soft spongy sheets 17-17', made preferably from foamed polypropylene which, like the material used for manufacturing the hollow body 1, is an industrially recyclable material. The soft spongy sheets 17-17' are die cut and are dimensioned to just the same size as the longitudinal recesses 16-16' containing them. In this way, Figures 2 and 3 show how the soft spongy sheets 17-17' are arranged flush with the respective larger sides 15-15', respectively, of the hollow body 1, i.e., they do not project from their respective housings formed by the longitudinal recesses 16-16'.

The external covering, or sheath, 4, shown in part in Figures 1, 2 and 3, completely covers the outer surface of the hollow body 1 and, like the hollow body 1 and the soft spongy sheets 17-17', it is preferably made of polypropylene.

The external covering 4, apart from conferring a surface finish on the hollow body 1 in keeping with the finish of the vehicle passenger compartment, is superimposed on the hollow body 1 in such a way that neither the holes 18-18', produced when forming the reinforcing ribs 13-13' inside of the hollow body 1, nor the perimetral edges 19-19' of the longitudinal recesses 16-16', respectively, may be felt.

Figures 2 and 3 show how the soft spongy sheets 17-17' are arranged between the larger outer sides 15-15', respectively, of the hollow body 1 and the outer covering 4, consequently defining respective soft areas M-M' on the respective larger outer sides of the sunvisor. These soft areas M-M', as said above, are arranged precisely in those areas of the sunvisor which are normally taken hold of by the user to change the position of the sunvisor.

In this embodiment of the sunvisor VP1 of the invention, there are contemplated two soft areas, one for each larger outer side of the sunvisor. This is obviously not a limitation of the invention, since a single soft area may be contemplated on one side or the other of the sunvisor. Thus, whether one or the other of these options is adopted, i.e. the presence of one or two soft areas in the sunvisor, one for each of the larger sides, will depend only on the requirements of each particular application.

On the other hand, the sunvisor embodiment VP1 of the invention as described above relates to a sunvisor not having any additional device such as may be the so-.called vanity mirror or any other device increasing the functionality of the sunvisor. It should be understood that if said sunvisor VP1 were to include one of such additional devices, this would in no way affect the essence of the invention, since it would obviously only affect the dimensions of the longitudinal recess and of the respective soft spongy sheet provided on the corresponding side of the sunvisor which, in this case, would have a contour similar to that of the sunvisor and to that of the device incorporated therein.

Figures 4 and 5 show an embodiment VP2 of the sunvisor of the invention which, as said above, comprises the same known elements described for the sunvisor embodiment VP1 of the invention.

Figures 4 and 5 show how the two larger sides 15 and 15' of the hollow body 1 are bridged at their lower longitudinal edge which, as shown in Figure 4, is the longitudinal edge opposite to the one where the fixing spring 2 is located by a recess 20 of substantially constant depth. This recess 20 is approximately coextensive with the hollow body 1 and is dimensioned in such a way as to occupy the areas normally taken hold of by the user to change the sunvisor VP2 position. In a similar way as for the previously described embodiment of sunvisor VP1, the dimensions and shape of the recess 20 shown in Figures 4 and 5 are given only as a guidance, since said recess 20 may have any other dimensions depending on the needs of each particular application, without this affecting the essence of the invention.

The recess 20 defines a corresponding housing occupied by the soft spongy material 21 produced by diecutting and preferably made from polypropylene. The dimensions of the soft spongy sheet 21 snugly mate with the dimensions of the recess 20 so that, as shown in Figure 5, it is flush with the corresponding surfaces of the hollow body 1 of the sunvisor VP2, i.e. flush with the larger sides 15 and 15' and with the lower longitudinal edge joining them.

The outer covering 4, shown in part in Figures 4 and 5, covers the whole of the outer surface of the hollow body 1 and is superimposed thereon so that neither the holes 18-18' produced during the forming of the reinforcing ribs 13-13', nor the perimetral edge 22 of the recess 20 can be felt.

Figure 5 shows how the soft spongy sheet 21 is arranged between the bottom of the recess 20 and the outer covering 4, thereby defining a soft area M2 which, extending continuously around the lower longitudinal edge, bridges both larger sides of the sunvisor VP2 of the invention. Said soft area M2 precisely occupies those portions of the sunvisor VP2 normally taken hold of by the user to change its position.

Also in a similar way as has been described for the sunvisor embodiment VP1 of the invention, in this sunvisor embodiment VP2 shown in Figures 4 and 5, no additional device such as may be, among others, the vanity mirror has been contemplated. It will obviously be understood that if the sunvisor VP2 were to comprise one of such additional devices, this would not affect the essence of the invention, since the presence of such device would simply involve the dimensions of the recess 20 of the hollow body 1 and of the corresponding soft spongy sheet 21, in both cases in the portion comprised on the corresponding larger face of the sunvisor VP2 on which such additional device was disposed.

## Claims

1. An automobile sunvisor comprising the following members: a hollow body (1) formed by blow or injection moulding of a plastics material, preferably a polyolefin such as polypropylene, having an essentially rectangular prismatic shape and the contour of which is variable in accordance with the configuration of the automobile passenger compartment; a fixing spring (2) arranged in the inside of the hollow body (1) and dimensioned to receive the corresponding pivot pin (8) of a bent support (9) attached to the vehicle structure and having means (10-10') which, when the sunvisor is attached to said support, enables the sunvisor to be rotated by the user about said pivot pin (8) and occupy stable positions of use and the rest position(s) of the sunvisor to be set; a hanging bridge (3) which, suitably disposed relative to the fixing spring (2), may engage a corresponding support also attached to the vehicle structure, said hanging bridge (3), when engaged with the said support, providing the sunvisor with an additional point of support for relieving possible mechanical overloads on the coupling of the pivot pin (8) of the bent support (9) with the fixing spring (2); structural reinforcing means (RE) which, arranged in the inside of the hollow body (1), prevents the sunvisor from being deformed under normal conditions of use; an external sheath-like covering (4) made from a plastics material, preferably polypropylene, providing the sunvisor with a surface finish in keeping with the interior finish of the automobile passenger compartment; a sheet of soft spongy material (17-17') is comprised between the hollow body (1) itself and the external covering (4), wherewith the latter is provided defining a corresponding soft area (M-M') covering the zones where normally the user presses when he takes hold of the sunvisor; and, as a discretionary selected complementary feature, an additional device such as may be the so-called vanity mirror which is normally included as original equipment in the passenger side sunvisor;
and which is characterized in that:
- on one or both of the larger sides (15-15') of the hollow body (1) there is a respective recess (16-16') of substantially constant depth, the length and contour of which are variable, depending on the dimensions and shape of said hollow body (1), said recess (16-16') forming the housing for the sheet of soft spongy material (17-17') which is dimensioned in length and thickness to be housed snugly in said recess (16-16'), flush with the corresponding outer surface of the hollow body (1).

2. An automobile sunvisor comprising the following members: a hollow body (1) formed by blow or injection moulding of a plastics material, preferably a polyolefin such as polypropylene, having an essentially rectangular prismatic shape and the contour of which is variable in accordance with the configuration of the automobile passenger compartment the hollow body (1) having the larger sides (15-15') thereof bridged at the lower longitudinal edge thereof, which is the longitudinal edge opposite to the one containing the fixing spring (2); a fixing spring (2) arranged in the inside of the hollow body (1) and dimensioned to receive the corresponding pivot pin (8) of a bent support (9) attached to the vehicle structure and having means (10-10') which, when the sunvisor is attached to said support (9), enables the sunvisor to be rotated by the user about said pivot pin (8) and occupy stable positions of use and the rest position(s) of the sunvisor to be set; a hanging bridge (3) which, suitably disposed relative to the fixing spring (2), may engage a corresponding support also attached to the vehicle structure, said hanging bridge (3), when engaged with the said support, providing the sunvisor with an additional point of support for relieving possible mechanical overloads on the coupling of the pivot pin (8) of the bent support (9) with the fixing spring (2); structural reinforcing means (RE) which, arranged in the inside of the hollow body (1), prevents the sunvisor from being deformed under normal conditions of use; an external sheath-like covering (4) made from a plastics material, preferably polypropylene, providing the sunvisor with a surface finish in keeping with the interior finish of the automobile passenger compartment; a single sheet of soft spongy material (21) is comprised between the hollow body (1) itself and the external sheath-like covering (4), wherewith the latter is provided, defining a soft area (M2) extending along the lower longitudinal edge of the sunvisor between both larger sides of the sunvisor, covering the zones where normally the user presses when he takes hold of the sunvisor; and, as a discretionary selected complementary feature, an additional device such as may be the so-called vanity mirror which is normally included as original equipment in the passenger side sunvisor;
and which is characterized by a recess (20) of substantially constant depth, the length and contour of which are variable depending on the dimensions and shape of the hollow body (1), said recess (20) forming a housing for the single sheet (21) of soft spongy material which is so dimensioned in extension and thickness snugly to be housed in said recess (20) flush with the outer surface of said hollow body.

3. The automobile sunvisor of claim 1 or claim 2, characterized in that the sheet of soft spongy material (17-17', 21) is made from foamed polyolefin.

4. The automobile sunvisor of claim 3, characterized in that the sheet of soft spongy material (17-17', 21) is made from foamed polypropylene.

5. The automobile sunvisor of claim 3, characterized in that the sheet of soft spongy material (17-17', 21) is made from foamed polythene.

## Patentansprüche

1. Kraftfahrzeug-Sonnenblende, die die folgenden Bauelemente umfaßt:
einen Hohlkörper (1), der durch Blasformen oder durch Spritzgießen aus einem Kunststoffmaterial, vorzugsweise aus einem Polyolefin wie z. B. Polypropylen, geformt wird, der eine im wesentlichen rechteckige, prismatische Form aufweist und dessen Außenlinie in Übereinstimmung mit der Anordnung des Kraftfahrzeug-Fahrgastraumes variiert werden kann; eine Befestigungsfeder (2), die im Inneren des Hohlkörpers (1) angeordnet ist und dimensioniert ist, um den entsprechenden Schwenk- bzw. Gelenkzapfen (8) eines gekrümmten Trägers bzw. Halters (9) aufzunehmen, der am Fabrzeugaufbau befestigt ist, und die Mittel (10-10') aufweist, die es ermöglichen, daß die Sonnenblende von dem Benutzer um den Gelenkzapfen (8) geschwenkt bzw. gedreht werden kann und stabile Verwendungspositionen einnehmen kann, wenn die Sonnenblende an dem Träger bzw. Halter angebracht ist, und daß die Ruheposition bzw. die Ruhepositionen der Sonnenblende eingestellt werden können; einen Aufhängesteg (3), der geeignet relativ zu der Befestigungsfeder angeordnet, in einen entsprechenden Halter eingreifen kann, der ebenfalls an dem Fahrzeugaufbau angebracht ist, wobei der Aufhängesteg (3) der Sonnenblende einen zusätzlichen Haltepunkt zur Verfügung stellt, wenn dieser sich in Eingriff mit dem Halter befindet, um mögliche mechanische Überbelastungen auf die Verbindung des Gelenkzapfens (8) des gekrümmten Halters (9) mit der Befestigungsfeder (2) zu vermindern bzw. entlasten; Konstruktionsverstärkungs bzw. versteifungsmittel (RE), die im Inneren des Hohlkörpers (1) angeordnet sind und die verhindern, daß die Sonnenblende unter normalen Einsatzbedingungen verformt wird; einen äußeren, hüllenartigen Überzug (4), hergestellt aus einem Kunststoffmaterial, vorzugsweise aus Polypropylen, der die Sonnenblende mit einem Oberflächenfinish versieht, indem dieser zu der Innenausstattung des Kraftfahrzeug-Fahrgastraumes passt; eine Schicht aus weichem, schwammigem Material (17-17'), die zwischen dem Hohlkörper (1) seinerseits und dem Außenüberzug (4) enthalten ist, womit der letztere versehen ist, wodurch ein entsprechender weicher Bereich (M-M') vorgegeben wird, der die Bereiche überdeckt, wo der Benutzer normalerweise gegendrückt, wenn er die Sonnenblende ergreift; und als ein nach Ermessen ausgewähltes Ergänzungsmerkmal eine zusätzliche Einrichtung wie beispielsweise den sogenannten Kosmetikspiegel, der normalerweise als Original- bzw. Serienausstattung in der beifahrerseitigen Sonnenblende enthalten ist; und die **dadurch gekennzeichnet** ist:
- daß es auf einer oder beiden der längeren Seiten (15-15') des Hohlkörpers (1) eine entsprechende Aussparung (16-16') mit im wesentlichen konstanter Tiefe gibt, deren Länge und Außenlinie variiert werden kann, und zwar je nach den Abmessungen und der Form des Hohlkörpers (1), wobei die Aussparung (16-16') das Gehäuse für die Schicht aus weichem, schwammigem Material (17-17') bildet, das in der Länge und Stärke bemessen ist, um eng anliegend in der Aussparung (16-16') aufgenommen zu werden, und zwar bündig mit der entsprechenden äußeren Oberfläche bzw. Außenfläche des Hohlkörpers (1).

2. Kraftfahrzeug-Sonnenblende, die die folgenden Bauelemente umfaßt:
einen Hohlkörper (1), der durch Blasformen oder durch Spritzgießen aus einem Kunststoffmaterial, vorzugsweise aus einem Polyolefin wie z. B. Polypropylen, geformt wird, der eine im wesentlichen rechteckige, prismatische Form aufweist und dessen Außenlinie in Übereinstimmung mit der Anordnung des Kraftfahrzeug-Fahrgastraumes variiert werden kann, wobei die längeren Seiten (15-15') des Hohlkörpers (1) an seiner unteren Längskante überbrückt werden, welches die Längskante gegenüber derjenigen Kante ist, welche die Befestigungsfeder (2) enthält; eine Befestigungsfeder (2), die im Inneren des Hohlkörpers (1) angeordnet ist und dimensioniert ist, um den entsprechenden Schwenk- bzw. Gelenkzapfen (8) eines gekrümmten Trägers bzw. Halters (9) aufzunehmen, der am Fahrzeugaufbau befestigt ist, und die Mittel (10-10') aufweist, die es ermöglichen, daß die Sonnenblende von dem Benutzer um den Gelenkzapfen (8) geschwenkt bzw. gedreht werden kann und stabile Verwendungspositionen einnehmen kann, wenn die Sonnenblende an dem Träger angebracht ist, und daß die Ruheposition bzw. die Ruhepositionen der Sonnenblende eingestellt werden können; einen Aufhängesteg (3), der geeignet relativ zu der Befestigungsfeder angeordnet, in einen entsprechenden Halter eingreifen kann, der ebenfalls an dem Fahrzeugaufbau angebracht ist, wobei der Aufhängesteg (3) der Sonnenblende einen zusätzlichen Haltepunkt zur Verfügung stellt, wenn dieser sich in Eingriff mit dem Halter befindet, um mögliche mechanische Überbelastungen auf die Verbindung des Gelenkzapfens (8) des gekrümmten Halters (9) mit der Befestigungsfeder (2) zu vermindern bzw. entlasten; Konstruktionsverstärkungs- bzw. versteifungsmittel (RE), die im Inneren des Hohlkörpers (1) angeordnet sind und die verhindern, daß die Sonnenblende unter normalen Einsatzbedingungen verformt wird; einen äußeren, hüllenartigen Überzug (4), hergestellt aus einem Kunststoffmaterial, vorzugsweise aus Polypropylen, der die Sonnenblende mit einem Oberflächenfinish versieht, indem dieser zu der Innenausstattung des Kraftfahrzeug-Fahrgastraumes passt; eine einzelne Schicht aus weichem, schwammigem Material (21), die zwischen dem Hohlkörper (1) seinerseits und dem Außenüberzug (4) enthalten ist, womit der Letztere versehen ist, wodurch ein entsprechender weicher Bereich (M2) vorgegeben wird, der sich längs der unteren Längskante der Sonnenblende zwischen beiden längeren Seiten der Sonnenblende erstreckt und der die Bereiche überdeckt, wo der Benutzer normalerweise gegendrückt, wenn er die Sonnenblende ergreift; und als ein nach Ermessen ausgewähltes Ergänzungsmerkmal eine zusätzliche Einrichtung wie beispielsweise den sogenannten Kosmetikspiegel, der normalerweise als Original- bzw. Serienausstattung in der beifahrerseitigen Sonnenblende enthalten ist;
und die **gekennzeichnet** ist durch eine Aussparung (20) mit im wesentlichen konstanter Tiefe, deren Länge und Außenlinie variiert werden kann, und zwar je nach den Abmessungen und der Form des Hohlkörpers (1), wobei die Aussparung (20) ein Gehäuse für die einzelne Schicht (21) aus weichem, schwammigem Material bildet, die so in der Ausdehung und Stärke bemessen ist, um eng anliegend in der Aussparung (20) aufgenommen zu werden, und zwar bündig mit der äußeren Oberfläche bzw. Außenfläche des Hohlkörpers.

3. Kraftfahrzeug-Sonnenblende nach Anspruch 1 oder Anspruch 2, dadurch **gekennzeichnet**, daß die Schicht aus weichem, schwammigem Material (17-17', 21) aus geschäumtem Polyolefin hergestellt ist.

4. Kraftfahrzeug-Sonnenblende nach Anspruch 3, dadurch **gekennzeichnet**, daß die Schicht aus weichem, schwammigem Material (17-17', 21) aus geschäumtem Polypropylen hergestellt ist.

5. Kraftfahrzeug-Sonnenblende nach Anspruch 3, dadurch **gekennzeichnet**, daß die Schicht aus weichem, schwammigem Material (17-17', 21) aus geschäumtem Polyethylen hergestellt ist.

## Revendications

1. Pare-soleil pour automobile comprenant les éléments suivants : un corps creux (1) formé par extrusion-soufflage ou par moulage par injection d'une matière plastique, de préférence une polyoléfine telle que le polypropylène, ayant une forme essentiellement prismatique et rectangulaire et dont le contour est variable selon la configuration du compartiment pour les passagers de l'automobile ; un ressort de fixation (2) agencé à l'intérieur du corps creux (1) et dimensionné pour recevoir le pivot correspondant (8) d'un support courbé (9) fixé à la structure du véhicule et muni d'un moyen (10-10') qui, lorsque le pare-soleil est fixé audit support, permet au pare-soleil d'être tourné par l'utilisateur autour dudit pivot (8) et d'occuper des positions d'utilisation stables et qui permet de régler la(les) position(s) de repos du pare-soleil ; un pontage (3) qui, disposé de façon appropriée par rapport au ressort de fixation (2), peut coopérer avec un support correspondant fixé également à la structure du véhicule, ledit pontage (3), lorsqu'il coopère avec ledit support, offrant au pare-soleil un point de support supplémentaire pour réduire les surcharges mécaniques éventuelles sur l'accouplement du pivot (8) du support courbé (9) avec le ressort de fixation (2) ; un moyen de renforcement structural (RE) qui, agencé à l'intérieur du corps creux (1), empêche le pare-soleil d'être déformé dans des conditions normales d'utilisation ; un habillage externe en forme d'enveloppe (4) réalisé à partir d'une matière plastique, de préférence du polypropylène, offrant au pare-soleil un fini de surface en accord avec le fini intérieur du compartiment pour les passagers de l'automobile ; une feuille de matière molle et spongieuse (17-17') qui est comprise entre le corps creux (1) lui-même et l'habillage externe (4), ce par quoi ce dernier est prévu définissant une zone molle correspondante (M-M') qui recouvre les zones où l' utilisateur appuie normalement lorsqu'il se saisit du pare-soleil ; et, comme caractéristique complémentaire choisie de façon facultative, un dispositif supplémentaire, tel que probablement le miroir qualifié de "miroir de courtoisie" qui est compris normalement comme équipement d'origine dans le pare-soleil du côté du passager ;
et qui est caractérisé en ce que :
sur un ou sur les deux des plus grands côtés (15-15') du corps creux (1), il y a un évidement respectif (16-16') de profondeur sensiblement constante, dont la longueur et le contour sont variables en fonction des dimensions et de la forme dudit corps creux (1), ledit évidement (16-16') formant le logement pour la feuille de matière molle et spongieuse (17-17') qui est dimensionnée en longueur et en épaisseur de manière à être logée de façon bien ajustée dans ledit évidement (16-16'), de niveau avec la surface extérieure correspondante du corps creux (1).

2. Pare-soleil pour automobile comprenant les éléments suivants : un corps creux (1) formé par extrusion-soufflage ou par moulage par injection d'une matière plastique, de préférence une polyoléfine telle que le polypropylène, ayant une forme essentiellement prismatique et rectangulaire et dont le contour est variable selon la configuration du compartiment pour les passagers de l'automobile, le corps creux (1) ayant ses plus grands côtés (15-15') reliés au niveau de leur bord longitudinal inférieur, qui est le bord longitudinal opposé à celui contenant le ressort de fixation (2) ; un ressort de fixation (2) agencé à l'intérieur du corps creux (1) et dimensionné pour recevoir le pivot correspondant (8) d'un support courbé (9) fixé à la structure du véhicule et muni d'un moyen (10-10') qui, lorsque le pare-soleil est fixé audit support (9), permet au pare-soleil d'être tourné par l'utilisateur autour dudit pivot (8) et d'occuper des positions d'utilisation stables et qui permet de régler la(les) position(s) de repos du pare-soleil ; un pontage (3) qui, disposé de façon appropriée par rapport au ressort de fixation (2), peut coopérer avec un support correspondant fixé également à la structure du véhicule, ledit pontage (3), lorsqu'il coopère avec ledit support, offrant au pare-soleil un point de support supplémentaire pour réduire les surcharges mécaniques éventuelles sur l'accouplement du pivot (8) du support courbé (9) avec le ressort de fixation (2) ; un moyen de renforcement structural (RE) qui, agencé à l'intérieur du corps creux (1), empêche le pare-soleil d'être déformé dans des conditions normales d'utilisation ; un habillage externe en forme d'enveloppe (4) réalisé à partir d'une matière plastique, de préférence du polypropylène, offrant au pare-soleil un fini de surface en accord avec le fini intérieur du compartiment pour les passagers de l'automobile ; une seule feuille de matière molle et spongieuse (21) qui est comprise entre le corps creux (1) lui-même et l'habillage externe en forme d'enveloppe (4), ce par quoi ce dernier est prévu définissant une zone molle (M2) qui s'étend le long du bord longitudinal inférieur du pare-soleil entre les deux plus grands côtés du pare-soleil, recouvrant les zones ou l'utilisateur appuie normalement lorsqu'il se saisit du pare-soleil ; et, comme caractéristique complémentaire choisie de façon facultative, un dispositif supplémentaire, tel que probablement le miroir qualifié de "miroir de courtoisie" qui est compris normalement en tant qu'équipement d'origine dans le pare-soleil du côté du passager ;
et qui est caractérisé par un évidement (20) de profondeur sensiblement constante, dont la longueur et le contour sont variables en fonction des dimensions et de la forme du corps creux (1), ledit évidement (20) formant un logement pour la seule feuille (21) de matière molle et spongieuse qui est dimensionnée en étendue et en épaisseur de manière à être logée de façon bien ajustée dans ledit évidement (20), de niveau avec la surface extérieure dudit corps creux.

3. Pare-soleil pour automobile selon la revendication 1 ou 2, caractérisé en ce que la feuille de matière molle et spongieuse (17-17', 21) est réalisée à partir de polyoléfine alvéolaire.

4. Pare-soleil pour automobile selon la revendication 3, caractérisé en ce que la feuille de matière molle et spongieuse (17-17', 21) est réalisée à partir de polypropylène alvéolaire.

5. Pare-soleil pour automobile selon la revendication 3, caractérisé en ce que la feuille de matière molle et spongieuse (17-17', 21) est réalisée à partir de polyéthylène alvéolaire.
